Europäisches Patentamt

**European Patent Office**

**Office européen des brevets**

(11) Numéro de publication: **0 281 897 B1**

(12) **FASCICULE DE BREVET EUROPEEN**

(45) Date de publication de fascicule du brevet: **16.12.92** (51) Int. Cl.⁵: **H01R 4/58**, H02G 15/04

(21) Numéro de dépôt: **88103051.4**

(22) Date de dépôt: **01.03.88**

(54) **Procédé de raccordement d'un cable électrique à isolant minéral, notamment dans le bâtiment réacteur d'une chaudière nucléaire.**

(30) Priorité: **03.03.87 FR 8702839**

(43) Date de publication de la demande:
**14.09.88 Bulletin 88/37**

(45) Mention de la délivrance du brevet:
**16.12.92 Bulletin 92/51**

(84) Etats contractants désignés:
**BE CH DE ES GB LI**

(56) Documents cités:
**FR-A- 1 471 591**
**GB-A- 1 270 100**

(73) Titulaire: **FRAMATOME**
**Tour Fiat 1, Place de la Coupole**
**F-92400 Courbevoie(FR)**

(72) Inventeur: **Despinoy, Bernard**
**45 avenue du Petit Groslay**
**F-93150 Le Blanc Mesnil(FR)**
Inventeur: **Durand, Philippe**
**6 allée des Roseaux**
**F-95580 Andilly(FR)**
Inventeur: **Mouget, Jean**
**6 rue Eugène Pottier**
**F-78280 Guyancourt(FR)**

(74) Mandataire: **Weinmiller, Jürgen et al**
**Lennéstrasse 9 Postfach 24**
**W-8133 Feldafing(DE)**

## Description

Dans les centrales nucléaires et notamment dans les bâtiments réacteurs des chaudières sont installés différents matériels électriques tels que des capteurs, des actionneurs etc... qui sont utilisés pour la surveillance des différents paramètres de fonctionnement du réacteur et le pilotage de celui-ci. Ces différents capteurs et actionneurs sont étudiés et construits pour fonctionner de façon correcte dans toutes les phases de fonctionnement, qu'elles soient normales ou accidentelles, ceci de façon à permettre la surveillance et la commande en continu des paramètres importants du réacteur et de ses circuits auxiliaires dans le bâtiment de confinement.

Les phases de fonctionnement accidentelles considérées résultent d'accidents choisis parmi les plus sévères, tels que les séismes et plus particulièrement ceux qui entraînent une rupture dans le circuit de refroidissement primaire de la chaudière

Les différents matériels électriques doivent fonctionner pendant et après ces phases, c'est-à-dire qu'ils doivent résister aux conditions d'ambiance très sévères qui existent alors. Ils sont donc conçus pur résister à ces conditions accidentelles pendant la durée de vie théorique d'une chaudière nucléaire et ils y résistent en fait. Un problème subsiste cependant aux divers points de raccordement de ces matériels avec les câbles de liaison vers les différents dispositifs qui délivrent les ordres ou qui reçoivent les signaux de mesures.

Ces câbles ont un isolant minéral fragmenté, par exemple de la poudre de magnésie ou d'alumine et une gaine en acier inoxydable qui leur permettent d'assurer de manière sûre leur fonction de transmission même en présence de rayonnements, de hautes températures et de certaines déformations ou tractions.

Un tel isolant minéral perd son pouvoir isolant s'il reçoit de l'humidité. Il en est efficacement protégé par la gaine sur la longueur du câble. Mais cette gaine est nécessairement interrompue à chaque extrémité du câble pour permettre le raccordement électrique de celui-ci. C'est pourquoi, pour éviter le risque de perte d'isolement électrique par introduction d'humidité dans la couche isolante du câble à partir des extrémités, un premier procédé de raccordement connu prévoit de protéger chaque extrémité exposée. On utilise pour cela un élément de protection d'extrémité en alumine qui vient recouvrir la tranche découverte de la couche isolante.

Par ailleurs le bornier, c'est-à-dire un ensemble des bornes de raccordement auxquelles divers câbles doivent être connectées, est disposé dans un boîtier de protection qui, selon le procédé connu, est réalisé de manière étanche dans le but d'empêcher l'humidité de parvenir en contact des bornes et en même temps au contact de l'élément de protection d'extrémité. L'extrémité de la couche isolante est ainsi protégée par deux barrières l'une rapprochée, à savoir l'élément de protection, l'autre plus éloignée, à savoir le boîtier de protection.

Il est cependant apparu, selon la présente invention, que cette double protection n'était pas aussi sûre qu'on le souhaitait. Il est plus précisément apparu que les principes technologiques pratiquement utilisables pour fabriquer les boîtiers de protection des borniers d'une manière simple et économique ne permettaient pas de garantir leur étanchéité après certains types d'accidents. Ceci peut être compris si on considère les valeurs retenues pour certains paramètres à l'intérieur du bâtiment réacteur après une rupture de tuyauterie primaire, une telle rupture étant réputée constituer l'accident le plus contraignant :

- température : environ 156°C
- pression : 5, 5 bars
- humidité : supérieure à 80%
- aspersion chimique pH 9,5.

Dans de telles conditions accidentelles et post-accidentelles l'étanchéité des boîtiers de protection n'est pas maintenue. De ce fait des pénétrations de vapeur d'eau se produisent sous l'effet de la différence de pression entre l'intérieur et l'extérieur. Cette vapeur se condense dans les boîtiers sans pouvoir s'échapper et l'humidité pénétre dans les extrémités des câbles. La dégradation des caractéristiques électriques des câbles qui en résulte au voisinage des connexions provoque alors des perturbations importantes dans les signaux transmis. La conduite du réacteur, après cette dégradation, devient difficile sinon totalement impossible.

Des problèmes comparables peuvent apparaître dans d'autres industries, notamment dans des usines chimiques ou des navires.

Par ailleurs le document de brevet GB-A 270 100 (BICC) décrit un deuxième procédé connu de raccordement d'un câble électrique à isolant minéral. Ce procédé est destiné à être appliqué dans des conditions qui sont apparemment moins sévères que celles qui ont été indiquées ci-dessus, et qui ne nécessitent pas la présence d'un boîtier de protection. Selon ce deuxième procédé connu l'extrémité du câble à raccorder est enrobée dans un bloc de résine qui est solidifié à l'intérieur d'une gaine de raccordement étanche.

La présente invention a pour but de permettre de raccorder un câble électrique à isolant minéral d'une manière simple économique et sûre qui conserve le pouvoir isolant du câble même dans des conditions sévères pouvant comporter notamment une aspersion par une eau qui peut être fortement conductrice, une atmosphère confinée, et de fortes variations de pression.

Elle a pour objet un procédé de raccordement d'un câble électrique à isolant minéral, notamment dans le bâtiment réacteur d'une chaudière nucléaire, ce procédé s'appliquant au raccordement électrique d'une extrémité d'un câble souple à une borne de raccordement qui doit être protégée par un boîtier de protection la contenant, ce câble comportant :

- une âme métallique pour conduire le courant,
- une couche électriquement isolante entourant cette âme, cette couche étant consituée d'un matériau minéral fractionné choisi pour conserver son pouvoir isolant lorsqu'il est soumis à des conditions de service n'incluant pas d'humidité, le matériau ainsi choisi perdant une partie sensible de ce pouvoir en présence d'humidité s'il n'est pas protégé contre elle,
- et une gaine de protection étanche entourant cette couche isolante et la protégeant de l'humidité à distance des extrémités du câble, ce procédé comportant les opérations suivantes :
- une opération de dénudage au cours de laquelle on dénude un tronçon extrême de l'âme du câble en enlevant ladite couche isolante et ladite gaine de protection, ce tronçon constituant un "tronçon initialement dénudé" dont la longueur s'étend d'une extrémité arrière du côté de la couche isolante subsistante, jusqu'à une extrémité avant libre,
- une opération de protection d'extrémité au cours de laquelle on entoure une fraction arrière du tronçon initialement dénudé par un élément de protection d'extrémité étanche et électriquement isolant qui s'étend radialement jusqu'à ladite gaine de protection de manière à limiter le risque d'entrée d'humité dans ladite couche isolante,
- et une opération de connexion de raccordement au cours de laquelle on place au moins une fraction avant d'une âme métallique de câble dans ledit boîtier de protection et on connecte électriquement cette fraction à cette borne de manière à réaliser ledit raccordement,
- ce procédé étant caractérisé par le fait qu'il comporte en outre une opération de préparation de tronçon de raccordement au cours de laquelle on prépare un tronçon de raccordement comportant lui-même,
- une âme métallique pour conduire le courant,
- et une couche protectrice entourant cette âme sur une fraction centrale de la longueur de ce tronçon, cette couche étant électriquement isolante et étanche à l'humidité et s'arrêtant à distance des extrémités du tronçon de raccordement pour laisser libres des fractions avant et arrière de cette âme,
- ce procédé comportant encore, après lesdites opérations de dénudage et de préparation de tronçon de raccordement, et avant ladite opération de protection d'extrémité, une opération de connexion préalable au cours de laquelle on connecte et fixe l'extrémité avant dudit tronçon initialement dénudé à ladite fraction arrière de l'âme dudit tronçon de raccordement,
- ledit élément de protection d'extrémité comportant un bloc de résine qui est solidifié à l'intérieur d'une gaine de raccordement étanche lors de ladite opération de protection d'extrémité, ce bloc s'étendant radialement au delà desdites gaine de protection et couche de protection, et s'étendant longitudinalement d'un point d'un tronçon non dénudé du câble jusqu'à un point de ladite couche de protection du tronçon de raccordement en entourant sur cette longueur la gaine de protection et le tronçon initialement dénudé dudit câble et la fraction arrière et la couche protectrice dudit tronçon de raccordement,
- ladite gaine de raccordement étant raccordée audit boîtier de protection,
- ladite fraction avant de l'âme du tronçon de raccordement étant connectée et fixée à ladite borne de raccordement au cours de ladite opération de connexion de raccordement.

De préférence ledit boîtier de protection comporte des ouvertures pour assurer l'égalité des pressions entre l'intérieur et l'extérieur et/ou permettre la sortie d'humidité.

Dans certains cas lesdites gaine de protection du câble et gaine de raccordement sont métalliques et constituent des blindages électriques de manière à former une structure coaxiale pour la transmission des signaux électriques, les parois dudit boîtier étant elles mêmes conductrices pour réaliser un blindage. Dans ces cas, de préférence, la paroi de ce boîtier est traversée par ladite gaine de raccordement et solidarisée de cette gaine, des connexions électriques étant réalisées entre cette paroi cette gaine et ladite gaine de protection du câble.

A l'aide des figures schématiques ci-jointes on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

Le mode de mise en oeuvre décrit comporte les dispositions mentionnées ci-dessus comme préférée selon l'invention. Il doit être compris que les éléments mentionnés peuvent être remplacés par d'autres éléments assurant les mêmes fonctions techniques.

La figure 1 représente une vue en coupe axiale d'un câble électrique préparé pour son raccordement selon le procédé connu précédemment mentionné.

La figure 2 représente une vue en coupe axiale d'un câble électrique préparé pour son raccordement selon la présente invention.

La figure 3 représente une vue en coupe de deux câbles électriques raccordés dans un boîtier selon la présente invention.

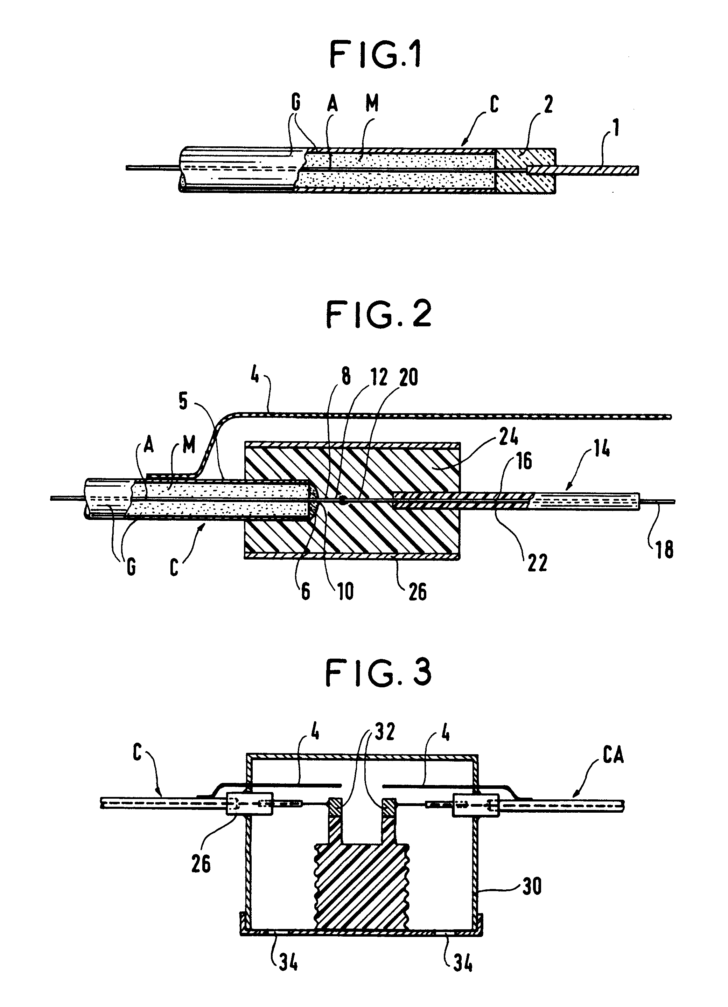

Selon la figure 1 un câble C comporte une âme A et une couche isolante minérale M revêtue d'une gaine G en acier inoxydable. L'âme du câble a été dénudée et munie d'un renfort 1 de façon à pouvoir être raccordée sur les barrettes d'un bornier. Un élément de protection d'extrémité en alumine 2 a été ajoutée de façon à obturer la surface libre de l'isolant et éviter l'introduction d'humidité dans le câble.

Malgré la présence de cet élément la résistance d'isolement entre l'âme du câble et la masse du réseau électrique chute de façon importante pour atteindre une valeur de l'ordre de 1000 ohms environ dans le cas de l'accident précédemment considéré. Or une telle diminution de la résistance d'isolement entraîne des perturbations très importantes des signaux transmis.

Selon la présente invention on évite de telles perturbations en préparant le même câble comme représenté à la figure 2.

Sur la gaine d'acier inoxydable G du câble C, on a soudé une tresse métallique 4 ou un fil de prolongation de masse.

Dans l'exemple donné le câble comporte une gaine en acier inoxydable mais l'invention s'applique tout aussi bien à un câble coaxial dont le ou les conducteurs externes comportent une tresse métallique à la masse.

On a par ailleurs denudé un tronçon extrême 8 de l'âme A du câble. Ce tronçon constitue le tronçon initialement dénudé précédemment mentionné. Il s'étend d'une extrémité arrière 10 à une extrémité avant 12.

A l'extrémité de la partie intacte du câble on a ajouté une première pièce de protection d'extrémité en alumine de petite épaisseur 6 pour obturer la surface libre de la couche isolante.

Par ailleurs un tronçon de raccordement 14 a été obtenu par coupe d'un autre câble qui a été choisi avec un isolant organique tel que du polyéthylène qui offre une bonne résistance d'isolement en milieu humide et qui constitue la couche de protection 22 précédemment mentionnée. L'âme 16 a été dénudée sur ses fractions extrêmes avant 18 et arrière 20. Puis, à l'extrémité avant du tronçon 8, on a soudé l'extrémité arrière de l'âme 16.

Les deux extrémités de câble ainsi soudées sont noyées dans un bloc de résine thermodurcissable 24, elle même entourée d'une gaine de raccordement en acier inoxydable 26. Cette résine est par exemple du type époxyde. Le diamètre de la gaine de protection 26 est par exemple de 14 mm alors que celui de la gaine G est de 2,5 mm.

L'élément de protection d'extrémité précédemment mentionnée comporte la pièce d'alumine 6 et le bloc 24 qui déborde sur le tronçon non dénudé 5 du câble C.

La fraction avant 18 de l'âme du tronçon 14 a été dénudée de façon à pouvoir être connectée à une borne électrique. Cette borne est choisie pour ses qualités de résistance aux conditions accidentelles et post-accidentelles. Le bornier peut être du type CK fabriqué par la Société Phönix. Dans les conditions de fonctionnement accidentelles citées ci-dessus la résistance à l'isolement d'une extrémité de câble raccordée ainsi à un bornier est supérieure à 10 Mégohms. C'est pourquoi les signaux transmis ne sont pas perturbés.

La figure 3 montre un exemple de montage dans un boîtier 30 comportant des bornes 32 auxquelles sont raccordées les âmes du câble C et d'un câble identique CA. Les fils ou tresses de continuité de masse 4 sont raccordées aux parois conductrices de ce boîtier. Les gaines de raccordement telles que 26 sont utilisées pour la traversée de ces parois avec connexion électrique.

Le boîtier 30 n'est pas étanche : il présente des ouvertures de ventilation 34 qui permettent l'entrée des vapeurs, mais également l'évacuation de gouttelettes de condensation de ladite vapeur.

L'extrémité de câble préparée selon l'invention permet dans tous les cas la transmission de signaux non perturbés dans un bâtiment réacteur de centrale nucléaire. Elle permet également cette transmission dans tous les cas oû l'on a des ambiances à forts taux d'humidité.

La résistivité de l'âme A est généralement inférieure à 20 ohm.cm et le plus souvent à 4 ohm.cm.

**Revendications**

1. Procédé de raccordement d'un câble électrique à isolant minéral, notamment dans le bâtiment réacteur d'une chaudière nucléaire, ce procédé s'appliquant au raccordement électrique d'une extrémité d'un câble souple (C) à une borne de raccordement (32) qui doit être protégée par un boîtier de protection (30) la contenant, ce câble comportant :
   - une âme métallique (A) pour conduire le courant,
   - une couche électriquement isolante (M) entourant cette âme, cette couche étant constituée d'un matériau minéral fractionné choisi pour conserver son pouvoir isolant lorsqu'il est soumis à des conditions de service n'incluant pas d'humidité, le matériau ainsi choisi perdant une partie sensible de ce pouvoir en présence d'humidité s'il n'est pas protégé contre elle,
- et une gaine de protection étanche (G) entourant cette couche isolante et la protégeant de l'humidité à distance des extrémités du câble, ce procédé comportant les opérations suivantes :
- une opération de dénudage au cours de laquelle on dénude un tronçon extrême de l'âme (A) du câble (C) en enlevant ladite couche isolante (M) et ladite gaine de protection (G), ce tronçon constituant un "tronçon initialement dénudé" (8) dont la longueur s'étend d'une extrémité arrière (10) du côté de la couche isolante subsistante, jusqu'à une extrémité avant libre (12),
- une opération de protection d'extrémité au cours de laquelle on entoure une fraction arrière du tronçon initialement dénudé par un élément de protection d'extrémité étanche et électriquement isolant (6, 24) qui s'étend radialement jusqu'à ladite gaine de protection (G) de manière à limiter le risque d'entrée d'humidité dans ladite couche isolante,
- et une opération de connexion de raccordement au cours de laquelle on place au moins une fraction avant (18) d'une âme métallique de câble dans ledit boîtier de protection (30) et on connecte électriquement cette fraction à cette borne de manière à réaliser ledit raccordement,
- ce procédé étant caractérisé par le fait qu'il comporte en outre une opération de préparation de tronçon de raccordement au cours de laquelle on prépare un tronçon de raccordement (14) comportant lui-même,
- une âme métallique (16) pour conduire le courant,
- et une couche protectrice (22) entourant cette âme sur une fraction centrale de la longueur de ce tronçon, cette couche étant électriquement isolante et étanche à l'humidité et s'arrêtant à distance des extrémités du tronçon de raccordement pour laisser libres des fractions avant (18) et arrière (20) de cette âme,
- ce procédé comportant encore, après lesdites opérations de dénudage et de préparation de tronçon de raccordement, et avant ladite opération de protection d'extrémité, une opération de connexion préalable au cours de laquelle on connecte et fixe l'extrémité avant (12) dudit tronçon initialement dénudé (8) à ladite fraction arrière (20) de l'âme dudit tronçon de raccordement,
- ledit élément de protection d'extrémité comportant un bloc de résine (24) qui est solidifié à l'intérieur d'une gaine de raccordement étanche (26) lors de ladite opération de protection d'extrémité, ce bloc s'étendant radialement au delà desdites gaine de protection (G) et couche de protection (22), et s'étendant longitudinalement d'un point d'un tronçon non dénudé (5) du câble (C) jusqu'à un point de ladite couche protection (22) du tronçon de raccordement en entourant sur cette longueur la gaine de protection (G) et le tronçon initialement dénudé (8) dudit câble et la fraction arrière (20) et la couche protectrice (22) dudit tronçon de raccordement,
- ladite gaine de raccordement (26) étant raccordée audit boîtier de protection (30),
- ladite fraction avant (18) de l'âme du tronçon de raccordement étant connectée et fixée à ladite borne de raccordement (32) au cours de ladite opération de connexion de raccordement.

2. Procédé selon la revendication 1, caractérisé par le fait que ledit boîtier de protection (30) comporte des ouvertures (34) pour assurer l'égalité des pressions entre l'intérieur et l'extérieur et/ou permettre la sortie d'humidité.

3. Procédé selon la revendication 1, dans lequel lesdites gaine de protection (G) du câble (C) et gaine de raccordement (26) sont métalliques et constituent des blindages électriques de manière à former une structure coaxiale pour la transmission des signaux électriques, les parois dudit boîtier (30) étant elles mêmes conductrices pour réaliser un blindage,
- ce procédé étant en outre caractérisé par le fait que la paroi de ce boîtier (30) est traversée par ladite gaine de raccordement (26) et solidarisée de cette gaine, des connexions électriques (4) étant réalisées entre cette paroi, cette gaine (26) et ladite gaine de protection (G) du câble (C).

**Claims**

1. A method for connecting an electric cable having a mineral insulation, in particular in the reactor building of a nuclear boiler, said method being applicable to electrically connecting one end of a resilient cable (C) to a connection terminal (32), which is to be protected by a protective box (30) housing it, said cable comprising:

- a metal core (A) for conducting electricity,
- an electrically insulating layer (M) surrounding said core, said layer being constituted by a divided mineral substance selected for its ability to remain insulating when subjected to operational conditions which do not include moisture, the substance selected in this way losing a substantial portion of said ability in the presence of moisture unless protected thereagainst, and
- a sealed protective sheath (G) surrounding said insulating layer and protecting it from moisture at a distance from the ends of the cable, said method comprising the following operations:
- a baring operation step during which an end length of the core (A) of the cable (C) is bared by removing said insulating layer (M) and said protective sheath (G), said length constituting an "initially bared length" (8) extending from a rear end (10) adjacent to the remaining insulating layer, up to a free front end (12),
- an end protecting operation step during which a rear fraction of the initially bared length is surrounded by an electrically insulating sealed protective end-fitting (6, 24) which extends radially as far as said protective sheath (G) so as to limit the risk of moisture penetrating into said insulating layer, and
- a connecting operation step during which at least a front fraction (18) of a metal cable core is placed in said protective box (30) and said fraction is connected to said terminal in order to provide said connection,
- said method being characterized in that it further comprises an operation step of preparing the connection length, during which step a connection length (14) is prepared which itself comprises:
- a metal core (16) for conducting electricity, and
- a protective layer (22) surrounding said core along a central fraction of said length, said layer being electrically insulating and proof against moisture, and terminating at a distance from the ends of the connection length in order to leave a front fraction (18) and rear fraction (20) of said core free,

- said method further comprising, after said baring operation step and said operation step of preparing the connection length, and prior to said operation step of protecting the end, a prior connection operation step during which the front end (12) of said initially bared length (8) is fixed and connected to said rear fraction (20) of the core of said connection length,
- said protective end-fitting comprising a block of resin (24) which is solidified inside a sealed connection sheath (26) during said end protection operation step, said block extending radially beyond said protective sheath (G) and said protective layer (22) and extending longitudinally from a point of a non-bared length (5) of the cable (C) up to a point of said protective layer (22) of the connection length, and surrounding along said length the protective sheath (G) and the initially bared length (8) of said cable and the rear fraction (20) and the protective layer (22) of said connection length,
- said connection sheath (26) being connected to said protective box (30),
- said front fraction (18) of the connection length core being connected and fixed to said connection terminal (32) during said connection operation step.

2. A method according to claim 1, characterized in that said protective box (30) includes openings (34) in order to equalize pressure between the inside and the outside thereof and/or to allow moisture to escape.

3. A method according to claim 1, characterized in that said protective sheath (G) of the cable (C) and said connection sheath (26) are made of metal and constitute electrical shielding and a coaxial structure for transmitting electrical signals, the walls of said box (30) being likewise conductive in order to provide shielding,
   - said method being further characterized in that the wall of said box (30) has said connection sheath (26) passing therethrough and is fixed to said sheath, with electrical connections (4) being provided between said wall, said sheath (26) and said protective sheath (G) of the cable (C).

**Patentansprüche**

1. Verfahren zum Verbinden eines elektrischen mineralisolierten Kabels, insbesondere im Reaktorgehäuse eines Nuklearkessels, wobei dieses Verfahren Anwendung findet bei der elektrischen Verbindung eines Endes eines biegsamen Kabels (C) mit einer Apschlußklemme (32), die von einem Schutzgehäuse (30), das sie enthält, geschützt werden muß, wobei das Kabel aufweist:

eine Metallseele (A) zum Leiten des Stromes,

eine elektrische Isolierschicht (M), die diese Seele umgibt, wobei diese Schicht aus einem fraktionierten Mineralmaterial gebildet wird, das gewählt ist, um seine Isolierkraft beizubehalten, wenn es Betriebsbedingungen unterworfen wird, die keine Feuchtigkeit umfassen, wobei das so gewählte Material einen wesentlichen Teil dieser Kraft bei Vorhandensein von Feuchtigkeit verliert, wenn es nicht gegen sie geschützt ist,

und eine dichte Schutzhülle (G), die diese Isolierschicht umgibt und im Abstand von den Enden des Kabels diese vor Feuchtigkeit schützt, wobei das Verfahren die folgenden Schritte aufweist:

einen Vorgang des Blannmachens, währenddem ein Endstück der Seele (A) des Kabels (C) blankgemacht wird unter Wegnehmen der Isolierschicht (M) und der Schutzhülle (G), wobei dieses Stück ein "ausgangs nacktes Stück" (8) bildet, dessen Länge sich von einem hinteren Ende (10) auf der Seite der bleibenden Isolierschicht bis zu einem vorderen freien Ende (12) erstreckt,

einen Vorgang des Schützens des Endes, bei dem ein hinterer Bruchteil des ausgangs blankgemachten Stückes von einem dichten und elektrisch isolierenden Endschutzelement (6, 24) umgeben wird, das sich radial bis zur Schutzhöhe (G) derart erstreckt, daß es die Gefahr von Feuchtigkeitseindringen in die isolierende Schicht begrenzt,

und einen Vorgang der Verbindung der Verbindungsstelle, während dem wenigstens ein vorderes Bruchstück (18) einer metallischen Seele des Kabels in dem Schutzgehäuse (30) angeordnet wird und elektrisch dieses Bruchstück mit dieser Anschlußklemme derart verbunden wird, daß es die Verbindung herstellt,

wobei das Verfahren gekennzeichnet ist dadurch, daß es weiterhin einen Schritt der Vorbereitung des Verbindungsstückes aufweist, während dem ein Verbindungsbruchstück (14) vorbereitet wird, das selbst aufweist,

eine metallische Seele (16) zum Leiten des Stromes,

und eine Schutzschicht (22), die diese Seele umgibt auf einem Mittenbruchteil der Länge dieses Stückes, wobei diese Schicht elektrisch isolierend und feuchtigkeitsdicht ist und im Abstand von den Enden des Verbindungsstückes endet, um die vorderen (18) und hinteren (20) Bruchstücke dieser Seele freizulassen,

wobei das Verfahren weiterhin, nach den Blankmachungsvorgängen und Vorbereitungsvorgängen des Verbindungsabschnitts vor dem genannten Endenschutzvorgang erfolgt, ein Verbindungsvorgang des vorderen festen Endes (12) des ausgangs blankgemachten Stükkes (8) mit dem hinteren Bruchstück (20) der Seele des Verbindungsstückes aufweist,

das Endenschutzelement einen Harzblock (24) aufweist, der im Inneren einer dichten Verbindungshülle (26) erstarrt ist, beim Vorgang des Endenschutzes, wobei dieser Block sich radial über die Schutzhülle (G) und der Schutzschicht (22) hinaus erstreckt, und sich längs von einem Punkt eines nicht-blankgemachten Stückes (5) des Kabels (C) bis zu einem Punkt der Schutzschicht (22) des Verbindungsstükkes erstreckt, unter Umgeben auf dieser Länge der Schutzhülle (G) und des ausgangs blankgemachten Stücks (8) des Kabels und des hinteren Bruchstückes (20) und der Schutzschicht (22) des Verbindungsstückes,

wobei die Verbindungshülle (26) mit dem Schutzgehäuse (30) verbunden ist,

wobei das vordere Bruchstück (18) der Seele des Verbindungsstückes mit der Anschlußklemme (32) während des Verbindungsvorgangs verbunden und befestigt wird.

2. Verfahren nach Anspruch 1, **dadurch gekennzeichnet,** daß das Schutzgehäuse (30) Öffnungen (34) aufweist, um die Gleichheit zwischen inneren und äußeren Drücken sicherzustellen, und/oder den Austritt von Feuchtigkeit zu ermöglichen.

3. Verfahren nach Anspruch 1, bei dem die Schutzhülle (G) des Kabels (C) und die Verbindungshülle (26) metallisch sind und elektrische Abschirmungen bilden, derart, daß sie eine koaxiale Struktur für die Übertragung von elektrischen Signalen bilden, wobei die Seitenwände des Gehäuses (20) selbst leitend sind, um eine Abschirmung zu erzeugen, wobei das Verfahren weiterhin **dadurch gekennzeichnet** ist, daß die Seitenwand des Gehäuses (30) von der Verbindungshülle (26) durchquert wird und mit dieser Hülle verbunden ist, wobei elektrische Verbindungen (4) zwischen dieser Seitenwand, dieser Hülle (26) und der Schutzhülle (G) des Kabels (C) erzeugt werden.

# FIG.1

# FIG.2

# FIG.3

8